# EUROPÄISCHE PATENTSCHRIFT

(11) **EP 1 103 556 B1**
(45) Veröffentlichungstag und Bekanntmachung des Hinweises auf die Patenterteilung: **14.11.2001**
(21) Anmeldenummer: 00123301.4
(22) Anmeldetag: 26.10.2000
(51) Int. Cl.: C07F 7/12

(54) **Verfahren zur Herstellung von halogenierten 1,2-Disilaethanen**
Process for preparing halogenated 1,2-disilaethane compounds
Procédé de préparation de composés de 1,2-disilaethane halogénées

(30) Priorität: 25.11.1999 DE 19956810
(43) Veröffentlichungstag der Anmeldung: 30.05.2001
(73) Patentinhaber: Wacker-Chemie GmbH, 81737 München (DE)
(72) Erfinder: Abele, Bors Cajus, Dr., 84489 Burghausen (DE); Winterfeld, Jörn, Dr., 84489 Burghausen (DE)
(74) Vertreter: Deffner-Lehner, Maria, Dr.

(56) Entgegenhaltungen:
- DE-A- 2 131 741

## Beschreibung

Die Erfindung betrifft ein Verfahren zur Herstellung von halogenierten 1,2-Disilaethanen.

Es ist eine Vielzahl von Verfahren zur Herstellung von halogenierten 1,2-Disilaethanen bekannt.

So sind sie über Hydrosilylierungsreaktionen erhältlich. Beispielsweise erfolgt die Herstellung von 1,2-Bis(chlordimethylsilyl)ethan über die Hydrosilylierungsreaktion zwischen Chlordimethylsilan und Chlordimethylvinylsilan. Die Hydrosilylierungsreaktionen sind in US-A 3,041,362, US-A 3,497,539, US-A 3,220,972, US-A 3,674,739, DE-A 2 131 741 bzw. der korrespondierenden US-A 3,798,252 (Wacker-Chemie GmbH, ausgegeben am 19. März 1974) und DE-A 2 131 742 (Wacker-Chemie GmbH, offengelegt am 28. Dezember 1972) beschrieben.

Weitere Verfahren zur Herstellung von 1,2-Bis(chlordimethylsilyl)ethan sind Chlorierungsreaktionen von Bis(trimethylsilyl)ethan (Kumada et al., J. Organomet. Chem. 1967, 10(1), 111-119 und Ishikawa et al., J. Organomet. Chem. 1970, 23(1), 63-69).

Desweiteren ist es bekannt halogenierte 1,2-Disilaethane durch Umsetzung von Disilanen mit Organylchloriden oder HCl herzustellen (H. Sakurai et al., Tetrahedron Lett. 1966, 45, 5493-7).

1,2-Bis(chlordimethylsilyl)ethan ist weiterhin über die Hydrosilylierung von Dimethylmethoxyvinylsilan mit Chlordimethylsilan zugänglich (Suryanarayanan et al., J. Organomet. Chem. 1973, 55(1), 65-71).

In DE-A 2 131 741 bzw. der korrespondierenden US-A 3,798,252 (Wacker-Chemie GmbH, ausgegeben am 19. März 1974), DE-A 2 131 742 (Wacker-Chemie GmbH, offengelegt am 28. Dezember 1972) und DE-A 2 001 303 (Wacker-Chemie GmbH, offengelegt am 22. Juli 1971) sind halogenierte 1,2-Disilaethane, wie 1,2-Bis(chlordimethylsilyl)ethan, als Lösungsmittel bei der Herstellung von Alkenylsilanen, wie Chlordimethylvinylsilan, beschrieben.

Es bestand die Aufgabe ein Verfahren zur Herstellung von halogenierten 1,2-Disilaethanen bereitzustellen, das einfach ist, wobei die halogenierten 1,2-Disilaethane in hoher Ausbeute und Reinheit bei kurzer Reaktionszeit erhalten werden. Weiterhin betand die Aufgabe ein besonders wirtschaftliches und umweltfreundliches Verfahren zur Herstellung von halogenierten 1,2-Disilaethanen bereitzustellen. Die Aufgabe wird durch die Erfindung gelöst.

Gegenstand der Erfindung ist ein Verfahren zur Herstellung von halogenierten 1,2-Disilaethanen der allgemeinen Formel

X₃₋ₙRₙSi-CHR¹CHR¹-SiRₙX₃₋ₙ (I)

wobei
R gleich oder verschieden sein kann und ein Wasserstoffatom oder einen einwertigen gegebenfalls substituierten Kohlenwasserstoffrest mit 1 bis 40 Kohlenstoffatom(en) je Rest,
R¹ gleich oder verschieden sein kann und ein Wasserstoffatom oder einen einwertigen gegebenfalls substituierten Kohlenwasserstoffrest mit 1 bis 40 Kohlenstoffatom(en) je Rest,
X ein Halogenatom
und n 0, 1 oder 2 bedeutet,
dadurch gekennzeichnet, daß halogenierte 1,2-Disilaethene der allgemeinen Formel

X₃₋ₙRₙSi-CR¹=CR¹-SiRₙX₃₋ₙ (II)

wobei R, R¹,X und n die oben dafür angegebene Bedeutung haben, mit Wasserstoff
in Gegenwart von die Hydrierung fördernde Katalysatoren umgesetzt werden.

Beispiele für Kohlenwasserstoffreste R sind Alkylreste, wie der Methyl-, Ethyl-, n-Propyl, iso-Propyl-, 1-n-Butyl, 2-Butyl-, iso-Butyl-, tert.-Butyl-, n-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,2-Trimethylpentylrest; Nonylreste, wie der n-Nonylrest; Decylreste, wie der n-Decylrest; Octadecylreste wie der n-Octadecylrest; Cycloalkylreste, wie der Cyclopentyl-, Cyclohexyl-, Cycloheptylrest und Methylcyclohexylreste; Alkenylreste, wie der Vinyl-, Allyl-, 3-Butenyl-, 5-Hexenyl-, 1-Propenyl- und 1-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tosylreste; Xylylreste und Ethylphenylreste; und Aralkylreste, wie der Benzylrest, der Phenylethylrest und der Phenylnonylrest.

Beispiele für substituierte Kohlenwasserstoffreste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest und mit Amin-, Mercapto- oder Ammoniumgruppen substituierte Kohlenwasserstoffreste mit 1 bis 18 Kohlenstoff-Atomen.

Bevorzugt ist der Rest R ein Wasserstoffatom oder ein einwertiger Kohlenwasserstoffrest mit 1 bis 18 Kohlenstoffatom(en) je Rest, wobei das Wasserstoffatom, der Methyl- und der Ethylrest besonders bevorzugt sind.

Beispiele für unsubstituierte und substituierte Reste R gelten in vollen Umfang für Reste R¹.
Bevorzugt ist der Rest R¹ ein Wasserstoffatom oder ein einwertiger Kohlenwasserstoffrest mit 1 bis 18 Kohlenstoffatom(en) je Rest, wobei das Wasserstoffatom, der Methyl- und der Ethylrest besonders bevorzugt sind.

Beispiele für X sind das Fluor-, Chlor-, Brom- und Jodatom, wobei das Chloratom bevorzugt ist.

Bevorzugte Beispiele für halogenierte 1,2-Disilaethane der Formel (I) sind
1,2-Bis(chlordimethylsilyl)ethan,
1,2-Bis(dichlormethylsilyl)ethan,
1,2-Bis(trichlorsilyl)ethan,
1,2-Bis(chlordiethylsilyl)ethan,
1,2-Bis(dichlorethylsilyl)ethan,
1-(Chlordimethylsilyl)-2-(dichlormethylsilyl)ethan,
1,2-Bis (chlordimethylsilyl)propan,
1,2-Bis(chlordimethylsilyl)butan und
2,3-Bis(chlordimethylsilyl)butan,
wobei
1,2-Bis(chlordimethylsilyl)ethan,
1,2-Bis(dichlormethylsilyl)ethan und
1,2-Bis(trichlorsilyl)ethan
besonders bevorzugt sind.

Weitere Beispiele für halogenierte 1,2-Disilaethane der Formel (I) sind die entsprechenden Fluor-, Brom- und Jodderivate, wobei die entsprechenden Bromderivate bevorzugt sind.

Bevorzugte Beispiele für die bei dem erfindungsgemäßen Verfahren eingesetzten halogenierten 1,2-Disilaethene der Formel (II) sind die cis- und trans-Isomere von
1,2-Bis(chlordimethylsilyl)ethen,
1,2-Bis(dichlormethylsilyl)ethen,
1,2-Bis (trichlormethyl)ethen,
1,2-Bis(chlordiethylsilyl)ethen,
1,2-Bis(dichlorethylsilyl)ethen,
1-(Chlordimethylsilyl)-2-(dichlormethylsilyl)ethen,
1,2-Bis(chlordimethylsilyl)prop-1-en,
1,2-Bis(chlordimethylsilyl)but-1-en,
2,3-Bis(chlordimethylsilyl)but-2-en,
wobei die cis- und trans-Isomere von
1,2-Bis(chlordimethylsilyl)ethen,
1,2-Bis(dichlormethylsilyl)ethen und
1,2-Bis(trichlorsilyl)ethen
besonders bevorzugt sind.

Weitere Beispiele für halogenierte 1,2-Disilaethene der Formel (II) sind die entsprechenden Fluor-, Brom- und Jodderivate, wobei die entsprechenden Bromderivate bevorzugt sind.

Die Herstellung von halogenierten 1,2-Disilaethen erfolgt bevorzugt durch Hydrosilylierungsreaktion zwischen Vinylsilanen und Hydridosilanen und nachfolgender Wasserstoffabstraktion. Halogenierte 1,2-Disilaethene fallen als Nebenprodukte der 1,2-Disilaethanherstellung aus Vinylsilanen und Hydridosilanen an.

Bei dem erfindungsgemäßen Verfahren werden halogenierte 1,2-Disilaethene der Formel (II) und Wasserstoff vorzugsweise im Molverhältnis (Verhältnis Doppelbindung in (II) zu Molekül H₂) von 1:0.6 bis 1:10¹⁰, bevorzugt im Molverhältnis 1:0.8 bis 1:10⁹, besonders bevorzugt im Molverhältnis 1:1 bis 1:10⁸ miteinander umgesetzt.

Als die Hydrierung fördernde Katalysatoren werden vorzugsweise homogene Katalysatoren, heterogene Katalysatoren und Katalysatoren zur katalytischen Transfer-Hydrierung, bevorzugt heterogene Katalysatoren und homogene Katalysatoren, besonders bevorzugt heterogene Katalysatoren eingesetzt.

Beispiele für heterogene Katalysatoren, also solche die sich auf Trägern befinden, sind Metalle der VIII. Nebengruppe des Periodensystems, wie Palladium, Platin, Nickel, Kobalt und Eisen; Kupfer; Mischungen der vorstehend genannten Metalle; Metalloxide der vorstehend genannten Metalle, wie Rheniumoxid, gemischte Metalloxide der vorstehend genannten Metalle und Kupferchromit, Metallsulfide der vorstehend genannten Metalle, wie Kobalt- und Nickelsulfid und Molybdänsulfid, wobei die Metalle, wie Palladium und Platin, bevorzugte Beispiele sind und Palladium ein besonders bevorzugtes Beispiel ist.

Die Metalle befinden sich vorzugsweise feinverteilt auf den Trägern.

Beispiele für Träger sind Aktivkohle; Kohle; anorganische Oxide, wie Siliciumdioxid, Aluminiumdioxid, Titandioxid, Zirkondioxid und Silicate; Carbonate, wie Calciumcarbonat und Bariumcarbonat; Sulfate, wie Bariumsulfat; und organische Träger, wie mit Siliciumdioxid gefüllte Polyethylenimine; wobei Kohle und Aktivkohle bevorzugte Beispiele sind.

Beispiele für homogene Katalysatoren sind Tricarbonylchrom-Solvens-Komplexe, Kobalt-, Ruthenium-, Rhodium-, Iridium-, Platin- und Titanverbindungen, wie auch Ziegler-Katalysatoren, wobei Kobalt-, Ruthenium-, Rhodium-, Iridium-, Platin- und Titanverbindungen bevorzugt und Ruthenium-, Rhodium-, Iridium- und Platinverbindungen besonders bevorzugt sind.

Beispiele für Katalysatoren zur Transfer-Hydrierung sind Palladium, Nickel und Platin, wobei Palladium und Nickel bevorzugt und Palladium besonders bevorzugt ist.
Der Katalysator wird bevorzugt in Mengen von 0.01 bis 20 Gew.-%, bezogen auf das Gesamtgewicht der halogenierten 1,2-Disilaethene der Formel (II) und Wasserstoff, besonders bevorzugt in Mengen von 0.1 bis 5 Gew.-%, bezogen auf das Gesamtgewicht der halogenierten 1,2-Disilaethene der Formel (II) und Wasserstoff, eingesetzt.

Das erfindungsgemäße Verfahren wird vorzugsweise bei einer Temperatur von -30°C bis +160°C, bevorzugt von +20°C bis +100°C durchgeführt. Ferner wird das erfindungsgemäße Verfahren vorzugsweise bei einem Druck von 0,5 bis 500 bar, bevorzugt von 0,6 bis 50 bar, besonders bevorzugt von 0,7 bis 20 bar durchgeführt.

Die nach dem erfindungsgemäßen Verfahren hergestellten halogenierten 1,2-Disilaethane der Formel (I) können nicht nur in situ hergestellt werden, sondern auch als Reinsubstanz isoliert werden, d.h. sie können direkt nach der Umsetzung auch ohne einen weiteren Reinigungsschritt, wie Destillation, in einer Reinheit von vorzugsweise 85 bis 99 %, bevorzugt 95 bis 99 %, erhalten werden.

Die nach dem erfindungsgemäßen Verfahren hergestellten halogenierten 1,2-Disilaethane der Formel (I) können durch Destillation als Reinsubstanz aus der Reaktionsmischunq oder, nach Zusatz eines geeigneten Solvens, als entsprechende Lösung destilliert oder gegebenenfalls aus der Lösung auskristallisiert werden.

Das erfindungsgemäße Verfahren kann ohne Lösemittel, in einem apolar aprotischen, polar aprotischen Lösemittel oder einer Kombination solcher Lösemittel erfolgen, wobei die Verwendung keiner oder aprotischer Lösemittel bevorzugt, die Verwendung keiner Lösemittel besonders bevorzugt ist. Bei dem erfindungsgemäßen Verfahren brauchen also keine, können aber auch reine apolar aprotische, polar aprotische Lösemittel oder deren Mischungen verwendet werden. Die Lösemittel können koordinierend oder nicht-koordinierend sein.

Vorzugsweise weisen die Lösemittel oder deren Mischungen einen Siedepunkt von 20 °C bis 250 °C bei 1013 hPa, insbesondere von 30 °C bis 230 °C bei 1013 hPa auf. Beispiele für aprotische geeignete organische Lösemittel sind Kohlenwasserstoffe, wie gesättigte lineare Kohlenwasserstoffe, bevorzugt Hexan oder Heptan; gesättigte cyclische Kohlenwasserstoffe, bevorzugt Cyclohexan; ungesättigte Kohlenwasserstoffe, bevorzugt aromatische Kohlenwasserstoffe, wie z.B. Benzol, Toluol, Xylol; Ether, bevorzugt Diethylether, Di-n-butylether, tert.-Butylmethylether, Dimethoxyethan, cyclische Ether; oder andere, Heteroatom-substituierte Verbindungen wie z.B., Amine, bevorzugt Tributylamin oder Pyridin. Hexan oder Heptan sind besonders bevorzugt.

Falls Lösemittel eingesetzt werden, werden sie in Mengen von vorzugsweise 0.01-1000, insbesondere 1-100 Gewichtsäquivalente bezogen auf das Gesamtgewicht der halogenierten 1,2-Disilaethene der Formel (II) eingesetzt.

Bei der Verwendung von Lösemitteln werden diese nach der erfindungsgemäßen Umsetzung vorzugsweise entfernt.

Das erfindungsgemäße Verfahren hat den Vorteil, dass halogenierte 1,2-Disilaethane der Formel (I) in hoher Ausbeute und Reinheit bei kurzer Reaktionszeit erhalten werden.

Weiterhin benötigt das erfindungsgemäße Verfahren außer dem Katalysator keine zusätzliche Aktivierung, z.B. durch ein Lösemittel.

Bei dem erfindungsgemäßen Verfahren werden vorzugsweise als halogenierte 1,2-Disilaethene der Formel (II) die Reaktionsrückstände, die bei der Herstellung von Alkenylsilanen (insbesondere Vinylsilane) anfallen und halogenierte 1,2-Disilaethene enthalten, eingesetzt.

Bei dem erfindungsgemäßen Verfahren werden bevorzugt als halogenierte 1,2-Disilaethene der Formel (II) die Reaktionsrückstände, die bei der Herstellung von Chlordimethylvinylsilan anfallen und 1,2-Bis(chlordimethylsilyl)ethen enthalten, eingesetzt.

Die Alkenylsilane werden vorzugsweise durch Anlagerung von Si-gebundene Wasserstoffatome aufweisenden Silanen, wobei die anderen Siliciumvalenzen durch Halogenatome und/oder einwertige Kohlenwassertoffreste abgesättigt sind an gegebenfalls substituiertem Acetylen
in Gegenwart von die Anlagerung von Si-gebundenem Wasserstoff an aliphatische Mehrfachbindung fördernde Katalysatoren, sogenannte Hydrosilylierungskatalysatoren, wie Platinkatalysatoren, hergestellt.
Das Verfahren ist in DE-OS 2 131 741 bzw. der korrespondierenden US 3,798,252 (ausgegeben am 19. März 1974, Wacker-Chemie GmbH)(US 3,798,252 is incorporated in) beschrieben.

Bevorzugt wird Chlordimethylvinylsilan durch Anlagerung von Dimethylchlorsilan an Acetylen
in Gegenwart von die Anlagerung von Si-gebundenem Wasserstoff an aliphatische Mehrfachbindung fördernde Katalysatoren hergestellt. Die Herstellung von Chlordimethylvinylsilan ist in Beispiel 12 der oben genannten US 3,798,252 beschrieben.

Der Reaktionsrückstand, vorzugsweise Destillationsrückstand, besteht aus einer durch fraktionierte Destillation unter normalem technischen Aufwand nicht trennbaren Mischung aus 1,2-Bis(chlordimethylsilyl)ethan, 1,2-Bis(chlordimethylsilyl)ethen)ethen und anderen polychlorierten Verbindungen.

Besonders vorteilhaft erweist sich daher das erfindungsgemäße Verfahren bei der Aufarbeitung der Destillationsrückstände, die ansonsten aufwendig entsorgt werden müßten.

Anfallendes 1,2-Bis(chlordimethylsilyl)ethan und 1,2-Bis(chlordimethylsilyl)ethen können durch das erfindungsgemäße Verfahren zu einem sehr großen Anteil (ca. 70 Gew-%) recycled werden. Durch die Aufarbeitung der Reaktionsrückstände bzw. der Produkte der Nebenreaktion wird es durch die großen, auf dem Weltmarkt anfallenden Mengen nicht mehr nötig sein, Rohstoffverbrauchende Synthesen von z.B. 1,2-Bis(chlordimethylsilyl)ethan durchzuführen. Es handelt sich daher um ein besonders umweltfreundliches und wirtschaftliches Verfahren.

Die nach dem erfindungsgemäßen Verfahren hergestellten 1,2-Disilaethane der allgemeinen Formel (I) finden insbesondere für synthetische Zwecke, z.B. im Bereich der Pharmasynthese, Agrochemie oder Polymerchemie oder als Lösemittel, für analytische Zwecke und akademische Zwecke Anwendung.

Es ist z.B. möglich, Reaktionen, wie Substitutions-, Deprotonierungs-, Additionsreaktionen usw. an 1,2-Disilaethanen durchzuführen.

Die nach dem erfindungsgemäßen Verfahren hergestellten 1,2-Disilaethane, bevorzugt 1,2-Bis(chlordimethylsilyl)ethan, werden als Schutzgruppen für Amine auf dem Gebiet der organisch-pharmazeutischen Synthese verwendet.
1,2-Bis(chlordimethylsilyl)ethan ist das zur Herstellung von Stabase-Addukten am häufigsten eingesetzte Reagenz. Basische primäre Amine (pKa ca. 10-11) bilden bei Raumtemperatur in Gegenwart von Triethylamin in Dichlormethan in hohen Ausbeuten Stabase-Addukte.
Durch diese Methode wurden verschiedenste aliphatische Amine, α-Aminosäureester, 6-Aminopenicillansäuremethylester, N,N-Dialkylhydrazine und ρ-Iodaniline geschützt. Weniger basische Amine (zumeist Aniline, pKa ca. 4-5) erfordern drastischere Bedingungen (n-Butyllithium/Diethylether/-78°C).

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25 °C. Sofern nicht anders angegeben, wurden die nachstehenden Beispiele bei einem Druck der umgebenden Atmosphäre, also etwa 1000 hPa, und bei Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt. Die Hydrierungen wurden in einem 11-Druckautoklaven durchgeführt.

### Beispiel 1 (Herstellung von 1,2-Bis(chlordimethylsilyl)ethan C₆H₁₄Si₂Cl₂)

Zu 300.0 g (1.41 mol) 1,2-Bis(chlordimethylsilyl)ethen und 1.5 g (0.7 mmol reines Pd) Pd/Aktivkohle wurde unter Rühren bei einer Temperatur von 50 °C H₂-Gas aufgepreßt, bis ein Druck von 5.0 bar erreicht wurde. Durch die Umsetzung fiel der Druck allmählich wieder auf ca. 2.0 bis 2.5 bar ab (ablaufende Hydrierungsreaktion!). Es wurde erneut H₂-Gas aufgepreßt, bis ein Druck von 5.0 bar erreicht wurde (wieder Druckabfall auf 2.0 bis 2.5 bar, Hydrierungsreaktion!). Dieser Vorgang wurde so lange wiederholt (ca. 15- bis 20-mal), bis der Druck bei erneutem Aufpressen von H2-Gas konstant bei 5 bar blieb, d.h. kein H2-Gas mehr vom System aufgenommen wurde. Danach wurde 2 h bei einem Druck von 5 bar und einer Temperatur von 50 °C nachgerührt.
Nach Entspannen der Apparatur wurde über eine Drucknutsche filtriert.
Die Ergebnisse sind in Tabelle 1 zusammengefaßt.

### Beispiel 2 (Herstellung von 1,2-Bis(dichlormethylsilyl)ethan C₄H₈Si₂Cl₄)

Beispiel 1 wurde mit der Abänderung wiederholt, daß anstelle von 300.0 g (1.41 mol) 1,2-Bis(chlordimethylsilyl)ethen 300.0 g (1.18 mol) 1,2-Bis(dichlormethylsilyl)ethen eingesetzt wurden. Die Ergebnisse sind in Tabelle 1 zusammengefaßt.

### Beispiel 3 (Herstellung von 1,2-Bis(trichlorsilyl)ethan C₂H₂Si₂Cl₆)

Beispiel 1 wurde mit der Abänderung wiederholt, daß anstelle von 300.0 g (1.41 mol) 1,2-Bis(chlordimethylsilyl)ethen 300.0 g (1.02 mol) 1,2-Bis(trichlorsilyl)ethen eingesetzt wurden. Die Ergebnisse sind in Tabelle 1 zusammengefaßt.

### Beispiel 4 (Herstellung von 1,2-Bis(chlordiethylsilyl)ethan C₁₀H₂₂Si₂Cl₂)

Beispiel 1 wurde mit der Abänderung wiederholt, daß anstelle von 300.0 g (1.41 mol) 1,2-Bis(chlordimethylsilyl)ethen 300.0 g (1.11 mol) 1,2-Bis(chlordiethylsilyl)ethen eingesetzt wurden. Die Ergebnisse sind in Tabelle 1 zusammengefaßt.

### Beispiel 5 (Herstellung von 1,2-Bis(dichlorethylsilyl)ethan C₆H₁₂Si₂Cl₄)

Beispiel 1 wurde mit der Abänderung wiederholt, daß anstelle von 300.0 g (1.41 mol) 1,2-Bis(chlordimethylsilyl)ethen 300.0 g (1.06 mol) 1,2-Bis(dichlorethylsilyl)ethen eingesetzt wurden. Die Ergebnisse sind in Tabelle 1 zusammengefaßt.

### Beispiel 6 (Herstellung von 1-(Chlordimethylsilyl)-2-(dichlormethylsilyl) ethan C₅H₁₁Si₂Cl₃)

Beispiel 1 wurde mit der Abänderung wiederholt, daß anstelle von 300.0 g (1.41 mol) 1,2-Bis(chlordimethylsilyl)ethen 300.0 g (1.28 mol) 1-(Chlordimethylsilyl)-2-(dichlormethylsilyl)ethen eingesetzt wurden.
Die Ergebnisse sind in Tabelle 1 zusammengefaßt.

### Beispiel 7 (Herstellung von 1,2-Bis(chlordimethylsilyl)propan C₇H₁₆Si₂Cl₂)

Beispiel 1 wurde mit der Abänderung wiederholt, daß anstelle von 300.0 g (1.41 mol) 1,2-Bis(chlordimethylsilyl)ethen 300.0 g (1.32 mol) 1,2-Bis(dichlormethylsilyl)prop-1-en eingesetzt wurden. Die Ergebnisse sind in Tabelle 1 zusammengefaßt.

### Beispiel 8 (Herstellung von 1,2-Bis(chlordimethylsilyl)butan C₈H₁₈Si₂Cl₂)

Beispiel 1 wurde mit der Abänderung wiederholt, daß anstelle von 300.0 g (1.41 mol) 1,2-Bis(chlordimethylsilyl)ethen 300.0 g (1.24 mol) 1,2-Bis(dichlormethylsilyl)but-1-en eingesetzt wurden.
Die Ergebnisse sind in Tabelle 1 zusammengefaßt.

### Beispiel 9 (Herstellung von 2,3-Bis(chlordimethylsilyl)butan C₈H₁₈Si₂Cl₂)

Beispiel 1 wurde mit der Abänderung wiederholt, daß anstelle von 300.0 g (1.41 mol) 1,2-Bis(chlordimethylsilyl)ethen 300.0 g (1.24 mol) 2,3-Bis(dichlormethylsilyl)but-2-en eingesetzt wurden.
Die Ergebnisse sind in Tabelle 1 zusammengefaßt.

### Beispiel 10 (Aufarbeitung von Destillationsrückständen der Chlordimethylvinylsilan (VM₂)-Herstellung I)

Chlordimethylvinylsilan wird durch Hydrosilylierungsreaktion von Chlordimethylsilan und Acetylen hergestellt.
Destillationsrückstände beinhalten neben anderen Rückständen beachtliche Mengen von 1,2-Bis(chlordimethylsilyl)ethan und 1,2-Bis(chlordimethylsilyl)ethen.
Zu einer Mischung aus 300.0 g (294 ml) VM₂-Rückstand (bestehend aus 1,2-Bis(chlordimethylsilyl)ethan, 1,2-Bis(chlordimethylsilyl)ethen und anderen u.a. polychlorierten Verbindungen) und 1.5 g (0.7 mmol reines Pd) Pd/Aktivkohle wurde unter Rühren bei einer Temperatur von 50 °C H₂-Gas aufgepreßt, bis ein Druck von 5.0 bar erreicht wurde. Durch die Umsetzung fiel der Druck allmählich wieder auf ca. 2.0 bis 2.5 bar ab (ablaufende Hydrierungsreaktion!). Es wurde erneut H₂-Gas aufgepreßt, bis ein Druck von 5.0 bar erreicht wurde (wieder Druckabfall auf 2.0 bis 2.5 bar, Hydrierungsreaktion!). Dieser Vorgang wurde so lange wiederholt (ca. 15- bis 20-mal), bis der Druck bei erneutem Aufpressen von H₂-Gas konstant bei 5 bar blieb, d.h. kein H₂-Gas mehr vom System aufgenommen wurde. Danach wurde 2 h bei einem Druck von 5 bar und einer Temperatur von 50 °C nachgerührt.
Nach Entspannen der Apparatur wurde über eine Drucknutsche filtriert und über eine 30 cm Füllkörperkolonne bei einem Druck von 5 mbar und einer Temperatur von 75-80 °C destilliert.
Die Ergebnisse sind in Tabelle 1 zusammengefaßt.

### Beispiel 11 (Aufarbeitung von Destillationsrückständen der Chlordimethylvinylsilan (VM₂)-Herstellung I)

Chlordimethylvinylsilan wird durch Hydrosilylierungsreaktion von Chlordimethylsilan und Acetylen hergestellt.

Destillationsrückstände beinhalten neben anderen Rückständen beachtliche Mengen von 1,2-Bis(chlordimethylsilyl)ethan und 1,2-Bis(chlordimethylsilyl)ethen.
445.1 g (437 ml) wurden einer fraktionierten Destillation unterzogen. Zu der in einer Fraktion resultierenden Mischung aus 261.0 g (256 ml) VM₂-Rückstand (bestehend aus 1,2-Bis(chlordimethylsilyl)ethan, 1,2-Bis(chlordimethylsilyl)ethen und 1.5 g (0.7 mmol reines Pd) Pd/Aktivkohle wurde unter Rühren bei einer Temperatur von 50 °C H₂-Gas aufgepreßt, bis ein Druck von 5.0 bar erreicht wurde. Durch die Umsetzung fiel der Druck allmählich wieder auf ca. 2.0 bis 2.5 bar ab (ablaufende Hydrierungsreaktion!). Es wurde erneut H₂-Gas aufgepreßt, bis ein Druck von 5.0 bar erreicht wurde (wieder Druckabfall auf 2.0 bis 2.5 bar, Hydrierungsreaktion!). Dieser Vorgang wurde so lange wiederholt (ca. 15- bis 20-mal), bis der Druck bei erneutem Aufpressen von H₂-Gas konstant bei 5 bar blieb, d.h. kein H₂-Gas mehr vom System aufgenommen wurde. Danach wurde 2 h bei einem Druck von 5 bar und einer Temperatur von 50 °C nachgerührt.
Nach Entspannen der Apparatur wurde über eine Drucknutsche filtriert.
Die Ergebnisse sind in Tabelle 1 zusammengefaßt.

### Beispiel 12 (Aufarbeitung von Destillationsrückständen der Chlordimethylvinylsilan (VM₂)-Herstellung I)

Chlordimethylvinylsilan wird durch Hydrosilylierungsreaktion von Chlordimethylsilan und Acetylen hergestellt.
Destillationsrückstände beinhalten neben anderen Rückständen beachtliche Mengen von 1,2-Bis(chlordimethylsilyl)ethan und 1,2-Bis(chlordimethylsilyl)ethen.)
445.1 g (437 ml) wurden einer fraktionierten Destillation unterzogen. Zu der in einer Fraktion resultierenden Mischung aus 261.0 g (256 ml) VM₂-Rückstand (bestehend aus 1,2-Bis(chlordimethylsilyl)ethan, 1,2-Bis(chlordimethylsilyl)ethen) und 1.5 g (0.7 mmol reines Pd) Pd/Aktivkohle wurde unter Rühren bei einer Temperatur von 50 °C H₂-Gas aufgepreßt, bis ein Druck von 5.0 bar erreicht wurde. Durch die Umsetzung fiel der Druck allmählich wieder auf ca. 2.0 bis 2.5 bar ab (ablaufende Hydrierungsreaktion!). Es wurde erneut H₂-Gas aufgepreßt, bis ein Druck von 5.0 bar erreicht wurde (wieder Druckabfall auf 2.0 bis 2.5 bar, Hydrierungsreaktion!). Dieser Vorgang wurde so lange wiederholt (ca. 15- bis 20-mal), bis der Druck bei erneutem Aufpressen von H₂-Gas konstant bei 5 bar blieb, d.h. kein H₂-Gas mehr vom System aufgenommen wurde. Danach wurde 2 h bei einem Druck von 5 bar und einer Temperatur von 50 °C nachgerührt.
Nach Entspannen der Apparatur wurde über eine Drucknutsche filtriert und über eine 30 cm Füllkörperkolonne bei einem Druck von 5 mbar und einer Temperatur von 75-80 °C destilliert.
Die Ergebnisse sind in Tabelle 1 zusammengefaßt.

### Beispiel 13 (Herstellung von 1,2-Bis(chlordimethylsilyl)ethan über homogene Katalyse)

Beispiel 1 wurde mit der Abänderung wiederholt, daß anstelle von 1.5 g (0.7 mmol reines Pd) Palladium/Aktivkohle 0.7 g (0.7 mmol) Tris-[triphenylphosphin]-ruthenium(II)-dichlorid eingesetzt wurden.
Die Ergebnisse sind in Tabelle 1 zusammengefaßt.

### Beispiel 14 (Herstellung von 1,2-Bis(chlordimethylsilyl)ethan über katalytische Transfer-Hydrierung)

Beispiel 1 wurde mit der Abänderung wiederholt, daß anstelle von 1.5 g (0.7 mmol reines Pd) Pd/Aktivkohle und H₂-Gas 1.5 g (0.7 mmol reines Pd) und 127.4 g (1.55 mol) Cyclohexen eingesetzt wurden.
Die Ergebnisse sind in Tabelle 1 zusammengefaßt.

**Tab. 1:**

| In den Beipielen 1 bis 14 erhaltenen Ausbeuten [g], Ausbeuten [%] und Reinheiten | | | |
|---|---|---|---|
| Beispiel | Ausbeute [g] | Ausbeute [%] | Reinheit [%] |
| 1 | 299.9 | 99 | 99 |
| 2 | 296.3 | 98 | 99 |
| 3 | 292.8 | 97 | 99 |
| 4 | 290.1 | 96 | 98 |
| 5 | 289.8 | 96 | 98 |
| 6 | 290.6 | 96 | 98 |
| 7 | 293.6 | 97 | 98 |
| 8 | 293.4 | 97 | 98 |
| 9 | 293.4 | 97 | 98 |
| 10 | 177.9 | 88 * | 99 |
| 11 | 261.0 | 87 * | 99 |
| 12 | 231.0 | 77 * | 99 |
| 13 | 293.8 | 97 | 98 |
| 14 | 293.8 | 97 | 98 |

| | | | |
|---|---|---|---|
| * bezogen auf 1,2-Bis(chlordimethylsilyl)ethan und 1,2-Bis(chlordimethylsilyl)ethen-Anteil in der Mischung | | | |

## Patentansprüche

1. Verfahren zur Herstellung von halogenierten 1,2-Disilaethanen der allgemeinen Formel
X₃₋ₙRₙSi-CHR¹CHR¹-SiRₙX₃₋ₙ (I)
wobei
R gleich oder verschieden sein kann und ein Wasserstoffatom oder einen einwertigen gegebenfalls substituierten Kohlenwasserstoffrest mit 1 bis 40 Kohlenstoffatom(en) je Rest,
R¹ gleich oder verschieden sein kann und ein Wasserstoffatom oder einen einwertigen gegebenfalls substituierten Kohlenwasserstoffrest mit 1 bis 40 Kohlenstoffatom(en) je Rest,
X ein Halogenatom
und n 0, 1 oder 2 bedeutet,
**dadurch gekennzeichnet, daß** halogenierte 1,2-Disilaethene der allgemeinen Formel
X₃₋ₙRₙSi-CR¹=CR¹-SiRₙX₃₋ₙ (II)
wobei R, R¹, X und n die oben dafür angegebene Bedeutung haben,
mit Wasserstoff in Gegenwart von die Hydrierung fördernde Katalysatoren umgesetzt werden.

2. Verfahren nach Anspruch 1, **dadurch gekennzeichnet, daß** R ein Methylrest ist.

3. Verfahren nach Anspruch 1 oder 2, **dadurch gekennzeichnet, daß** R¹ ein Wasserstoffatom ist.

4. Verfahren nach Anspruch 1, 2 oder 3, **dadurch gekennzeichnet, daß** X ein Chloratom ist.

5. Verfahren nach einem der Ansprüche 1 bis 4, **dadurch gekennzeichnet, daß** als halogeniertes 1,2-Disilaethen 1,2-Bis(chlordimethylsilyl)ethen eingesetzt wird.

6. Verfahren nach einem der Ansprüche 1 bis 5, **dadurch gekennzeichnet, daß** als halogenierte 1,2-Disilaethene die bei der Herstellung von Alkenylsilanen anfallenden, halogenierte 1,2-Disilaethene enthaltenden Reaktionsrückstände eingesetzt werden.

7. Verfahren nach Anspruch 6, **dadurch gekennzeichnet, daß** die Alkenylsilane durch Anlagerung von Si-gebundene Wasserstoffatome aufweisenden Silanen, wobei die anderen Siliciumvalenzen durch Halogenatome und/oder einwertige Kohlenwassertoffreste abgesättigt sind an gegebenfalls substituiertem Acetylen in Gegenwart von die Anlagerung von Si-gebundenem Wasserstoff an aliphatische Mehrfachbindung fördernde Katalysatoren hergestellt werden.

8. Verfahren nach Anspruch 6, **dadurch gekennzeichnet, daß** als halogenierte 1,2-Disilaethene die bei der Herstellung von Chlordimethylvinylsilan anfallenden, 1,2-Bis(chlordimethylsilyl)ethen enthaltenden Reaktionsrückstände eingesetzt werden.

9. Verfahren nach Anspruch 8, **dadurch gekennzeichnet, daß** Chlordimethylvinylsilan durch Anlagerung von Chlordimethylsilan an Acetylen
in Gegenwart von die Anlagerung von Si-gebundenem Wasserstoff an aliphatische Mehrfachbindung fördernde Katalysatoren
hergestellt wird.

## Claims

1. Process for the preparation of halogenated 1,2-disilaethanes of the general formula
X₃₋ₙRₙSi-CHR¹CHR¹-SiRₙX₃₋ₙ (I),
in which
R may be identical or different and denotes a hydrogen atom or a monovalent optionally substituted hydrocarbon radical having 1 to 40 carbon atom(s) per radical,
R¹ may be identical or different and denotes a hydrogen atom or a monovalent optionally substituted hydrocarbon radical having 1 to 40 carbon atom(s) per radical,
X denotes a halogen atom
and n denotes 0, 1 or 2,
**characterized in that** halogenated 1,2-disilaethenes of the general formula
X₃₋ₙRₙSi-CR¹=CR¹-SiRₙX₃₋ₙ (II),
in which R, R¹, X and n have the meaning stated above therefor,
are reacted with hydrogen in the presence of hydrogenation-promoting catalysts.

2. Process according to Claim 1, **characterized in that** R is a methyl radical.

3. Process according to Claim 1 or 2, **characterized in that** R¹ is a hydrogen atom.

4. Process according to Claim 1, 2 or 3, **characterized in that** X is a chlorine atom.

5. Process according to any of Claims 1 to 4, **characterized in that** the halogenated 1,2-disilaethene used is 1,2-bis(chlorodimethylsilyl)ethene.

6. Process according to any of Claims 1 to 5, **characterized in that** the reaction residues obtained in the preparation of alkenylsilanes and containing halogenated 1,2-disilaethenes are used as halogenated 1,2-disilaethenes.

7. Process according to Claim 6, **characterized in that** the alkenylsilanes are prepared by an addition reaction of silanes having Si-bonded hydrogen atoms, the other silicon valences being saturated by halogen atoms and/or monovalent hydrocarbon radicals, with optionally substituted acetylene in the presence of catalysts promoting the addition of Si-bonded hydrogen at an aliphatic multiple bond.

8. Process according to Claim 6, **characterized in that** the reaction residues obtained in the preparation of chlorodimethylvinylsilane and containing 1,2-bis(chlorodimethylsilyl)ethene are used as halogenated 1,2-disilaethenes.

9. Process according to Claim 8, **characterized in that** chlorodimethylvinylsilane is prepared by an addition reaction of chlorodimethylsilane with acetylene in the presence of catalysts promoting the addition of Si-bonded hydrogen at an aliphatic multiple bond.

## Revendications

1. Procédé pour la préparation de 1,2-disilaéthanes halogénés de formule générale
X₃₋ₙRₙSi-CHR¹CHR¹-SiRₙX₃₋ₙ (I)
dans laquelle
les radicaux R peuvent être identiques ou différents, et représentent un atome d'hydrogène ou un radical hydrocarboné monovalent éventuellement substitué, ayant de 1 à 40 atomes de carbone par radical,
les radicaux R¹ peuvent être identiques ou différents, et représentent un atome d'hydrogène ou un radical hydrocarboné monovalent éventuellement substitué, ayant de 1 à 40 atomes de carbone par radical,
X représente un atome d'halogène
et n représente 0, 1 ou 2,
**caractérisé en ce qu'**on fait réagir des 1,2-disilaéthènes halogénés de formule générale
X₃₋ₙRₙSi-CR¹=CR¹-SiRₙX₃₋ₙ (II)
dans laquelle R, R¹, X et n ont les significations données ci-dessus pour ces symboles,
avec de l'hydrogène en présence de catalyseurs facilitant l'hydrogénation.

2. Procédé selon la revendication 1, **caractérisé en ce que** R est un groupe méthyle.

3. Procédé selon la revendication 1 ou 2, **caractérisé en ce que** R¹ est un atome d'hydrogène.

4. Procédé selon la revendication 1, 2 ou 3, **caractérisé en ce que** X est un atome de chlore.

5. Procédé selon l'une quelconque des revendications 1 à 4, **caractérisé en ce qu'**on utilise comme 1,2-disilaéthène halogéné le 1,2-bis(chlorodiméthylsilyl)éthène.

6. Procédé selon l'une quelconque des revendications 1 à 5, **caractérisé en ce qu'**on utilise comme 1,2-disilaéthènes halogénés les résidus de réaction contenant des 1,2-disilaéthènes halogénés, formés lors de la préparation d'alcénylsilanes.

7. Procédé selon la revendication 6, **caractérisé en ce que** les alcénylsilanes sont préparés par fixation par addition de silanes, comportant des atomes d'hydrogène liés à Si, les autres valences du silicium étant saturées par des atomes d'halogène et/ou des radicaux hydrocarbonés monovalents, sur un acétylène éventuellement substitué, en présence de catalyseurs facilitant la fixation par addition d'hydrogène lié à Si sur une double liaison aliphatique.

8. Procédé selon la revendication 6, **caractérisé en ce qu'**on utilise comme 1,2-disilaéthènes halogénés les résidus de réaction contenant du 1,2-(chlorodiméthylsilyl)éthène, formés lors de la préparation du chlorodiméthylvinylsilane.

9. Procédé selon la revendication 8, **caractérisé en ce que** le chlorodiméthylvinylsilane est préparé par fixation par addition de chlorodiméthylsilane sur l'acétylène, en présence de catalyseurs facilitant la fixation par addition d'hydrogène lié à Si sur une double liaison aliphatique.
